# EUROPÄISCHE PATENTSCHRIFT

(11) **EP 2 825 791 B1**
(45) Veröffentlichungstag und Bekanntmachung des Hinweises auf die Patenterteilung: **13.04.2016**
(21) Anmeldenummer: 13718159.0
(22) Anmeldetag: 16.04.2013
(51) Int. Cl.: F16H 57/08

(54) **BAUTEIL FÜR EIN PLANETENGETRIEBE**
COMPONENT FOR A PLANETARY GEAR TRAIN
PIÈCE POUR TRAIN ÉPICYCLOÏDAL

(30) Priorität: 20.04.2012 DE 202012004029 U
(43) Veröffentlichungstag der Anmeldung: 21.01.2015
(73) Patentinhaber: Siemens Aktiengesellschaft, 80333 München (DE)
(72) Erfinder: KIESENBAUER, Jens, 09322 Penig (DE)
(86) Internationale Anmeldenummer: PCT/EP2013/057877
(87) Internationale Veröffentlichungsnummer: WO 2013/156463

(56) Entgegenhaltungen:
- DE-A1-102007 010 092
- US-A- 2 095 794
- US-A- 4 315 556
- US-A1- 2006 275 607

## Beschreibung

Die vorliegende Erfindung betrifft ein einen Planetenträger und eine Welle umfassendes Bauteil für ein Planetengetriebe, sowie ein Planetengetriebe.

Bei Planetengetrieben, insbesondere für industrielle Anwendungen, sind Ausführungen bekannt, die abtriebsseitig eine Vollwelle aufweisen. Um diese Getriebewelle z.B. mit einer Arbeitsmaschine drehfest verbinden zu können, ist es üblich, auf dem Umfang der Welle eine Passfedernut oder eine Verzahnung vorzusehen.

Das gattungsgemäße Dokument US 2 095 794 A (Corbin George M), 12. Oktober 1937, offenbart ein einstückiges Bauteil für ein Planetengetriebe, umfassend einen Planetenträger und eine koaxial an dem Planetenträger angeordnete Hohlwelle, deren Hohlraum durch eine Öffnung an mindestens einem axialen Ende der Hohlwelle zugänglich ist, wobei die Hohlwelle an ihrem Außenumfang mindestens ein zur Ausbildung einer Welle-Nabe-Verbindung geeignetes Verbindungselement trägt, wobei der Planetenträger eine Wange umfasst, an welcher die Hohlwelle angeordnet ist.

Aufgabe der vorliegenden Erfindung ist es, ein verbessertes Bauteil für ein Planetengetriebe, umfassend einen Planetenträger und eine Welle, bereitzustellen. Weiter ist es Aufgabe der vorliegenden Erfindung, ein Planetengetriebe mit einem derartigen Bauteil bereitzustellen.

Die Aufgabe bezüglich des Bauteils wird erfindungsgemäß durch ein Bauteil mit den in Anspruch 1 angegebenen Merkmalen gelöst. Die Aufgabe bezüglich des Planetengetriebes wird erfindungsgemäß durch ein Planetengetriebe gemäß Anspruch 12 gelöst.

Das in einem Stück gegossene Bauteil ist für ein Planetengetriebe vorgesehen. Es umfasst einen Planetenträger und eine Hohlwelle, welche koaxial an dem Planetenträger angeordnet ist. Die Hohlwelle ist hohl gegossen. Ihr Hohlraum ist durch eine Öffnung zugänglich, welche an mindestens einem axialen Ende der Hohlwelle angeordnet ist. Die Hohlwelle trägt an ihrem Außenumfang mindestens ein Verbindungselement, welches zur Ausbildung einer Welle-Nabe-Verbindung geeignet ist.

Das Bauteil ist so ausgebildet, dass die Hohlwelle ein axiales Ende des Bauteils bildet. Die Hohlwelle kann somit gleichbedeutend auch als hohler Wellenzapfen bezeichnet werden.

Bei einer herkömmlichen Herstellung eines Planetenträgers einer Abtriebsstufe aus einem Stück mit der abtriebsseitigen Vollwelle wird dieses einstückige Bauteil häufig gegossen. Dabei wird die Vollwelle in der Gussform üblicherweise nach oben ragend angeordnet, weil auf diese Weise eine definierte, gerichtete Erstarrung des flüssigen Metalls von dem verhältnismäßig dünnwandigen Planetenträger in Richtung zu dem materialstarken Wellenende erfolgen kann, von wo das Gussmaterial eintritt. Durch die verhältnismäßig große Änderung der Materialstärke im Übergangsbereich zwischen einer Wange des Planetenträgers und der Vollwelle können im Bereich der Vollwelle beim Gießen Materialanhäufungen entstehen, wodurch Gießfehler wie Porositäten, Lunker und Verunreinigungen begünstigt werden.

Um diese Gießfehler zu vermeiden, wird bislang in der Gussform häufig die Vollwelle nach oben hin verlängert, oder es werden großvolumige Speiser eingesetzt. Dadurch können die auftretenden Gießfehler in Bereiche oberhalb der eigentlichen Vollwelle verlagert werden, welche nach dem Erstarren durch mechanische Bearbeitung entfernbar sind.

Eine kontrollierte, fehlerarme Erstarrung im Bereich des sprunghaften Materialstärkenübergangs zwischen Planetenträger und Vollwelle kann bislang häufig nur durch den massiven Einsatz von gieß- und formtechnischen Maßnahmen wie Kühleisen realisiert werden.

Dagegen wird bei der vorliegenden Erfindung die mit dem Planetenträger verbundene Getriebewelle, welche vorzugsweise als ein abtriebsseitiger Wellenzapfen, ausgebildet ist, mit einem stirnseitig offenen Hohlraum versehen, ohne an den Umschließungsflächen dieses Hohlraums Anflächungen, z.B. eine Passfedernut oder eine Verzahnung, vorzusehen, die zur Ausbildung einer Verbindung mit einer externen Welle dienen könnten. Statt an der Innenseite der Hohlwelle werden derartige Anflächungen auf dem Außenumfang der Hohlwelle ausgebildet.

Der Erfindung liegt dabei die Erkenntnis zugrunde, dass bei einer hohlen Ausführung der Welle die Wandstärken im Bereich der Welle gegenüber einer Vollwelle maßgeblich reduziert sind und infolgedessen ein Abguss des Bauteils, umfassend einen Planetenträger und eine Welle, mit einer in der Gussform nach unten ragenden Welle möglich ist, weil somit die Gießquerschnitte in der Welle dünner sind als in der sich anschließenden Wange des Planetenträgers. Die der Erfindung zugrunde liegende Idee kann also darin gesehen werden, am Bauteil eine Hohlwelle vorzusehen, ohne den Hohlraum der Hohlwelle zur Ausbildung einer drehfesten Welle-Nabe-Verbindung zu nutzen, z.B. indem eine externe, zweite Welle in den Hohlraum der Hohlwelle eingesteckt wird, und ohne Medien oder Versorgungsleitungen durch den Hohlraum der Hohlwelle zu leiten bzw. führen. Das bedeutet, dass der Hohlraum in erster Linie aus dem Grund vorgesehen ist, die Gießbarkeit des Bauteils zu verbessern.

Die geringere Wandstärke im Bereich der Welle als bei einer Vollwelle ergibt höhere Festigkeitswerte des Gusswerkstoffs, gibt daher höhere mechanische Sicherheiten und ermöglicht somit eine Übertragung höherer Kräfte und Drehmomente.

Außerdem wird durch die hohle Ausbildung der Welle Gussmaterial im Inneren der Welle eingespart, wo es ohnehin nur einen sehr geringen Beitrag zur Tragfähigkeit leisten könnte. Die Materialeinsparung führt zu einer wesentlichen Kosten- und Gewichtsreduktion.

Gegenüber herkömmlichen Wellen, bei denen zur Reduktion von Gießfehlern zusätzliches Material an der Welle angehäuft wird, ergibt sich bei der vorliegenden Erfindung eine deutliche Materialeinsparung und eine Reduzierung des mechanischen Bearbeitungsaufwands, z.B. ein Abtrennen des zusätzlichen Materials an der Welle, und somit ein Kostenvorteil.

Durch den Abguss mit einer nach unten gerichteter Welle ist es möglich, Speiser seitlich am Gussteil anzusetzen. Dadurch wird die Gesamthöhe in der Gussform, z.B. in einem Gusskasten, deutlich reduziert. Somit können kleinere Formautomaten oder überhaupt erst ein Automatenguss verwendet werden, was wiederum Kostenvorteile bietet.

Vorteilhafte Ausgestaltungen und Weiterbildungen der Erfindung sind in den abhängigen Ansprüchen angegeben.

Vorzugsweise ist die Hohlwelle als eine Abtriebswelle ausgebildet. Dabei kann das Bauteil auf der Abtriebsseite eines Planetengetriebes eingesetzt werden.

Gemäß einer bevorzugten Weiterbildung der Erfindung ist das zur Ausbildung einer Welle-Nabe-Verbindung geeignete Verbindungselement eine Passfedernut oder eine Verzahnung, insbesondere eine Passverzahnung. Die hohl gegossene Welle kann sowohl als ein zylindrisches Wellenende mit einer Passfedernut als auch in einer anderen Form mit außen, d.h. am Außenumfang der Welle, liegenden Funktionsflächen ausgebildet werden. Eine Welle-Nabe-Verbindung der Hohlwelle des Bauteils mit einer über die Hohlwelle gesteckten externen, zweiten Welle kann z.B. mit einer auf dem Außenumfang der Hohlwelle ausgebildeten Passfedernut oder Verzahnung ausgebildet werden. Die Ausgestaltung des Hohlraums der Hohlwelle ist dabei bereits bei einer Dimensionierung der gewünschten Welle-Nabe-Verbindung zu berücksichtigen.

Es ist möglich, dass die Hohlwelle hohlzylinderförmig ist. Es ist auch möglich, dass die Hohlwelle die Form eines Kegelstumpfes aufweist. Außerdem ist es möglich, dass die Öffnung kreisförmig ist. Weiter ist es möglich, dass der Hohlraum zylinderförmig ist, insbesondere die Form eines Kreiszylinders hat. Alternativ ist es möglich, dass der Hohlraum die Form eines Kegelstumpfes aufweist. Der Vorteil dabei ist, dass die Welle rotationssymmetrisch und somit das Bauteil einfach herzustellen und einzusetzen ist.

Vorzugsweise bleiben die Innenseiten der Hohlwelle, d.h. die den Hohlraum begrenzenden Wände, nach dem Abguss unbearbeitet. Während bei einer herkömmlichen Hohlwelle die Innenseiten der Hohlwelle eine Funktion erbringen müssen, insbesondere zur Ausbildung einer Welle-Nabe-Verbindung mit einer in die Hohlwelle gesteckten externen zweiten Welle mittels einer an der Hohlwelle-Innenseite ausgebildeten Passfedernut oder eines auf dem Außenumfang der Hohlwelle aufgesetzten Schrumpfrings, und daher nach dem Guss einer Nachbearbeitung unterzogen werden, haben bei der vorliegenden Erfindung die Innenseiten keine Funktion außer einer Verbesserung der Gießbarkeit des Bauteils. Dadurch, dass bei der vorliegenden Erfindung die Innenseiten der Hohlwelle gänzlich unbearbeitet bleiben können, werden Arbeitszeit und somit Kosten eingespart.

Es ist möglich, dass der Hohlraum über seine axiale Länge einen konstanten Innendurchmesser aufweist. Der Vorteil dabei ist, dass die Herstellung, d.h. der Guss, des Bauteils einfach ist.

Es ist aber auch möglich, dass der Hohlraum über seine axiale Länge einen variierenden Innendurchmesser aufweist, z.B. um der Hohlwelle bestimmte Eigenschaften zu verleihen, insbesondere bezüglich Torsions- oder Biegesteifigkeit. Insbesondere kann sich der Hohlraum in axialer Richtung verjüngen.

Gemäß einer bevorzugten Ausgestaltung der Erfindung nimmt die Wandstärke der Hohlwelle in Richtung zu dem Planetenträger vorzugsweise gestuft zu. Dabei ist es möglich, dass der Außendurchmesser der Hohlwelle in Richtung zu dem Planetenträger vorzugsweise gestuft zunimmt. Auf diese Weise ist der Wandstärkenübergang zwischen Welle und Wange des Planetenträgers graduell ausgeführt. Ein solcher gradueller Wandstärkenübergang reduziert die Fehleranfälligkeit im Übergangsbereich zwischen der Welle und der Wange des Planetenträgers.

Gemäß einer vorteilhaften Ausgestaltung umfasst der Planetenträger eine Wange, an welcher ein axiales Ende der Hohlwelle angeordnet ist.

Gemäß einer vorteilhaften Ausgestaltung umfasst der Planetenträger zwei parallele, durch Stege miteinander verbundene Wangen, wobei ein axiales Ende der Hohlwelle an einer Seite einer der Wangen angeordnet ist, welche von der anderen Wange abgewandt ist. Der Vorteil dieses geometrisch klaren und einfachen Aufbaus ist eine einfache Herstellbarkeit des Bauteils und die Möglichkeit eines problemlosen Einbaus von Planetenrädern in den Planetenträger. Es ist aber auch möglich, dass der Planetenträger mehr als zwei Wangen aufweist, wobei die Hohlwelle an einer dieser Wangen angeformt ist.

Gemäß einer vorteilhaften Weiterbildung sind die Wangen jeweils in Form einer quadratischen Platte mit abgerundeten Ecken ausgebildet, die Wangen Lagersitze zur Anordnung von Planetenrädern zwischen den beiden Wangen aufweisen und die Stege im Bereich der Ecken angeordnet sind. Der Vorteil dieses geometrisch klaren und einfachen Aufbaus ist eine einfache Herstellbarkeit des Bauteils und die Möglichkeit eines problemlosen Einbaus von Planetenrädern in den Planetenträger. Es ist auch möglich, dass die Wangen in Form einer dreieckigen Platte oder allgemein in Form eines Vielecks ausgebildet sind. Dabei kann die Anzahl der in den Wangen angeordneten Lagerstellen für Planetenradlager variieren. Es ist z.B. möglich, dass bei dreieckigen Wangen die Zahl der Lagerstellen drei beträgt, bei quadratischen Wangen die Zahl der Lagerstellen vier beträgt, und allgemein bei N-eckigen Wangen die Zahl der Lagerstellen N beträgt, wobei N eine natürliche Zahl ist.

Insbesondere ist es vorteilhaft, dass die Wangen jeweils in Form einer quadratischen Platte mit abgerundeten Ecken ausgebildet sind, die Wangen Lagersitze zur Anordnung von Planetenrädern zwischen den beiden Wangen aufweisen und die Stege im Bereich der Ecken angeordnet sind. Der Vorteil dieses geometrisch klaren, einfachen und kompakten Aufbaus ist eine einfache Herstellbarkeit des Planetenträgers und die Möglichkeit eines problemlosen Einbaus von Planetenrädern in den Planetenträger.

Gemäß einer vorteilhaften Weiterbildung ist der Hohlraum durch eine Öffnung an einem von dem Planetenträger abgewandten, ersten axialen Ende der Hohlwelle und/oder durch eine Öffnung an einem entgegen gesetzten, dem Planetenträger zugewandten, zweiten axialen Ende der Hohlwelle zugänglich.

Insbesondere handelt es sich bei der vorliegenden Erfindung um einen Planetenträger mit einem angegossenen, hohlen Abtriebszapfen für ein zylindrisches Wellenende mit einer außen liegenden Passfedernut oder Außenpassverzahnung.

Ein erfindungsgemäßes Planetengetriebe umfasst ein erfindungsgemäßes Bauteil oder ein Bauteil gemäß einer der oben angegebenen Weiterbildungen.

Gemäß einer vorteilhaften Weiterbildung eines erfindungsgemäßen Planetengetriebes bildet die Hohlwelle einen Abtriebszapfen des Planetengetriebes. Alternativ ist es auch möglich, dass die Hohlwelle ein Antriebszapfen des Planetengetriebes ist.

Im Folgenden wird die Erfindung anhand mehrerer Ausführungsbeispiele unter Zuhilfenahme der beiliegenden Zeichnungen erläutert. Es zeigt
- Fig. 1: eine Ansicht eines Bauteils gemäß einem ersten Ausführungsbeispiel;
- Fig. 2: einen ersten Schnitt des Bauteils von Fig. 1;
- Fig. 3: einen zweiten Schnitt des Bauteils von Fig. 1;
- Fig. 4: eine Ansicht eines Bauteils gemäß einem weiteren Ausführungsbeispiel;
- Fig. 5: einen Schnitt des Bauteils von Fig. 4;
- Fig. 6: einen Schnitt eines Gussmodells mit angesetzten Speisern;
- Fig. 7: einen Schnitt eines Bauteils gemäß einem weiteren Ausführungsbeispiel, bei dem die Hohlwelle an ihren beiden axialen Enden jeweils eine Öffnung aufweist; und
- Fig. 8: einen Schnitt eines Bauteils gemäß einem weiteren Ausführungsbeispiel, bei dem die von dem Planetenträger abgewandte Stirnseite der Hohlwelle verschlossen ist.

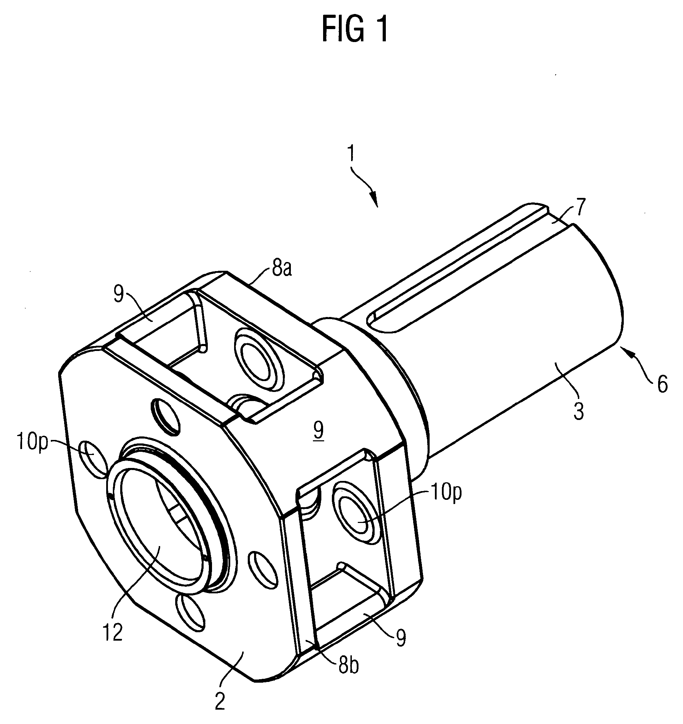

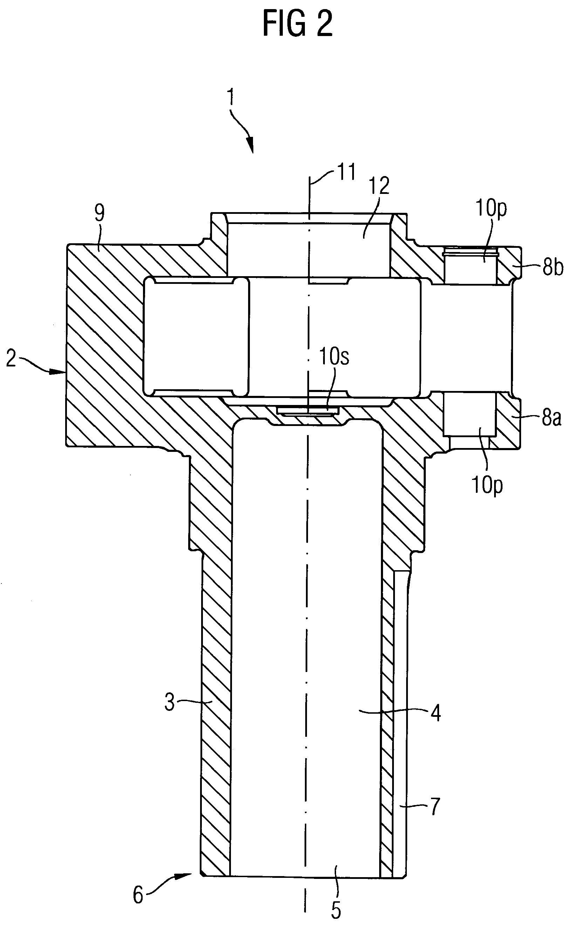

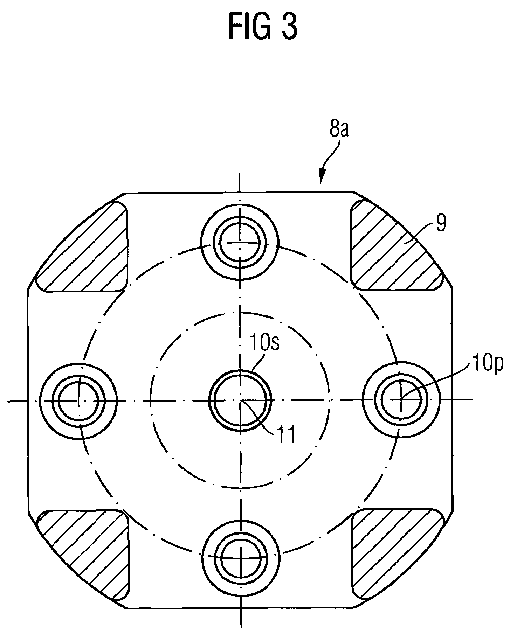

Fig. 1 und 2 zeigen ein einstückig gegossenes Bauteil 1 für ein Planetengetriebe in einer Schrägansicht bzw. in einem Schnitt entlang seiner Rotationsachse 11. Das Bauteil 1 umfasst einen Planetenträger 2, bestehend aus zwei parallel angeordneten, plattenförmigen Wangen 8a und 8b, welche durch vier Stege 9 miteinander verbunden sind, welche senkrecht zu den Plattenebenen verlaufen. Die Wangen 8a und 8b haben jeweils die Form eines Quadrats mit abgerundeten Ecken, wie der in Fig. 3 dargestellte Schnitt durch den Planetenträger 2 senkrecht zur Rotationsachse 11 mit Blick auf eine erste Wange 8a zeigt. Dabei ist eine Ecke der ersten Wange 8a jeweils durch einen der Stege 9 so mit einer korrespondierenden Ecke der anderen Wange 8b verbunden, dass ein Käfig zur Aufnahme von vier Planetenrädern gebildet wird. Als Durchdringungen der Wangen 8a und 8b ausgebildete Lagersitze 10p zur Lagerung einer Planetenachse sind jeweils zwischen benachbarten Stegen 9 in den gegenüberliegenden Wangen 8a und 8b ausgebildet.

Das Bauteil 1 umfasst außerdem eine als Hohlwelle ausgebildete Abtriebswelle 3, in der während der Herstellung des Bauteils 1 durch ein Gussverfahren ein Hohlraum 4 ausgebildet wurde, wie in Fig. 2 gezeigt ist. Dabei weist der kreiszylinderförmige Hohlraum 4 über seine gesamte axiale Länge denselben Durchmesser auf.

Der Hohlraum 4 ist durch eine kreisförmige Öffnung 5 an einem axialen Ende 6 der Abtriebswelle 3 zugänglich. Das entgegengesetzte Ende der Abtriebswelle 3 schließt sich einstückig an die erste Wange 8a des Planetenträgers an. Das Bauteil 1 ist so ausgebildet, dass der Planetenträger 2 ein erstes axiales Ende des Bauteils 1 und die Hohlwelle 3 ein dem ersten axialen Bauteilende entgegen gesetztes zweites axiales Ende des Bauteils 1 bildet. Dabei ist der Hohlraum 4 innerhalb der Hohlwelle 3 durch die erste Wange 8a abgeschlossen, welche an dieser Stelle koaxial einen Lagersitz 10s für ein Lager einer Sonnenradwelle aufweist. Dabei fallen die Rotationsachsen 11 der Abtriebswelle 3 und des Planetenträgers 2 zusammen, d.h. die Abtriebswelle 3 und der Planetenträger 2 sind koaxial zueinander angeordnet. Die von der Abtriebswelle 3 abgewandte Wange 8b weist eine axiale Durchdringung 12 zur Durchführung einer Sonnenradwelle auf. Der Außendurchmesser der Hohlwelle 3 nimmt in Richtung zu dem Planetenträger 2 gestuft zu; aufgrund des gleichbleibenden Innendurchmessers des Hohlraums 4 nimmt somit auch die Wandstärke der Hohlwelle 3 in Richtung zu dem Planetenträger 2 gestuft zu.

Auf dem Außenumfang der Abtriebswelle 3 ist über eine definierte axiale Länge eine Passfedernut 7 ausgeformt. In dem vorliegenden Ausführungsbeispiel beginnt die Nut 7 an dem geöffneten axialen Ende 6 der Hohlwelle 3 und erstreckt sich ungefähr über zwei Drittel der Wellenachse. Diese Nut 7 dient dazu, die Abtriebswelle 3 mit einer Welle einer Arbeitsmaschine zu verbinden.

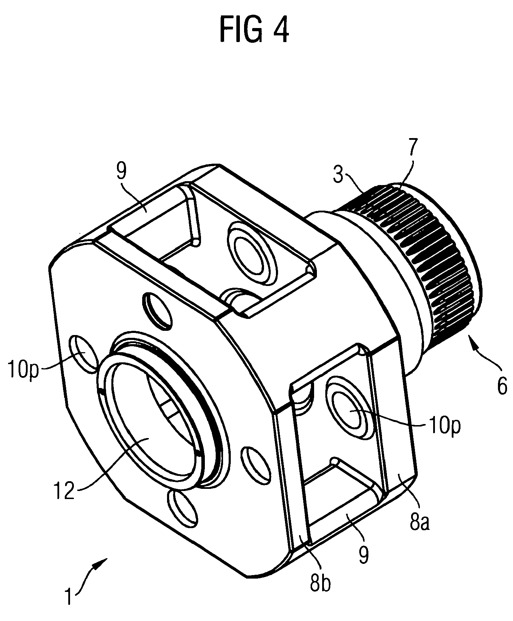

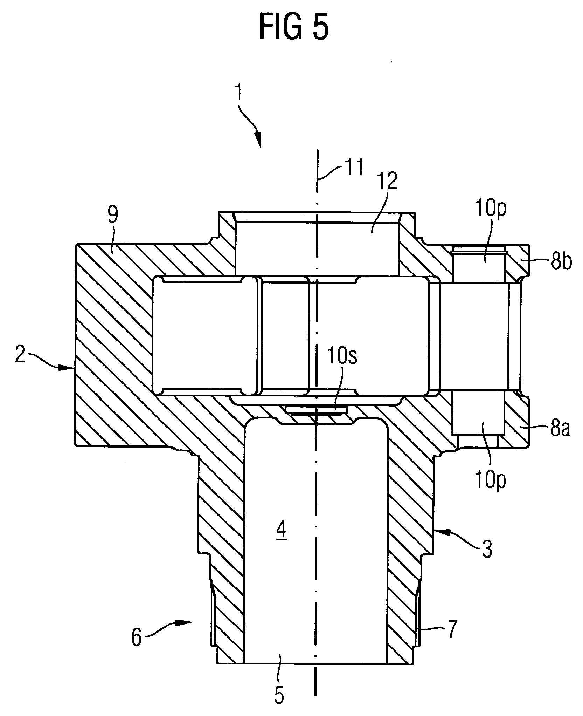

Fig. 4 und 5 zeigen ein Bauteil 1 gemäß einem weiteren Ausführungsbeispiel, welches ähnlich wie das in den Fig. 1 bis 3 gezeigte, erste Ausführungsbeispiel ausgebildet ist, außer dem Verbindungselement 7: im Gegensatz zu dem ersten Ausführungsbeispiel ist bei dem in Fig. 4 und 5 dargestellten Ausführungsbeispiel das Verbindungselement 7 als eine auf dem Außenumfang der Hohlwelle 3 angeordnete Passverzahnung ausgebildet. Zudem ist die axiale Länge der Hohlwelle 3 signifikant kleiner als bei dem ersten Ausführungsbeispiel.

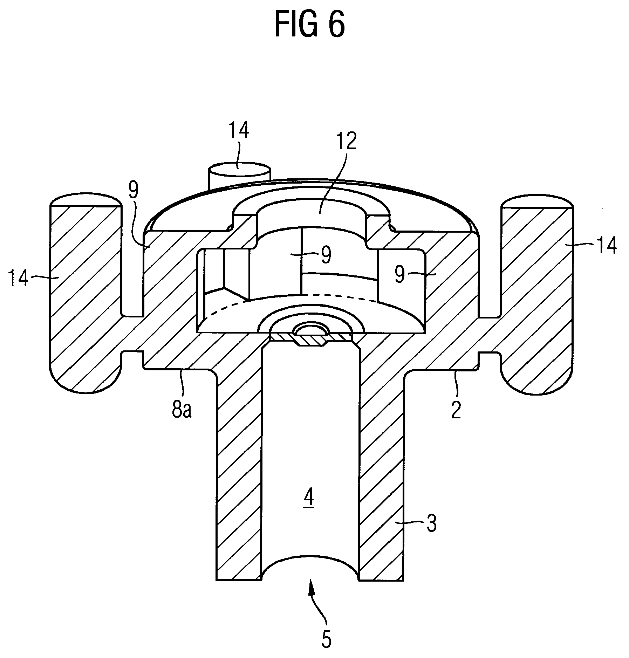

Fig. 6 zeigt einen Schnitt eines Gussmodells mit angesetzten Speisern. Bei dem Gussmodell handelt es sich um ein Bauteil umfassend einen Planetenträger 2 und eine Hohlwelle 3 während der Herstellung in einem Gießvorgang. Das Gussmaterial wird über seitlich an dem Planetenträger 2 angeordnete Speiser 14 zugeführt.

Durch den Guss mit in der Gussform nach unten gerichteter Welle ist es möglich, die Speiser 14 seitlich am Gussteil anzusetzen. Dadurch wird die Gesamthöhe in der Gussform, z.B. in einem Gusskasten, reduziert.

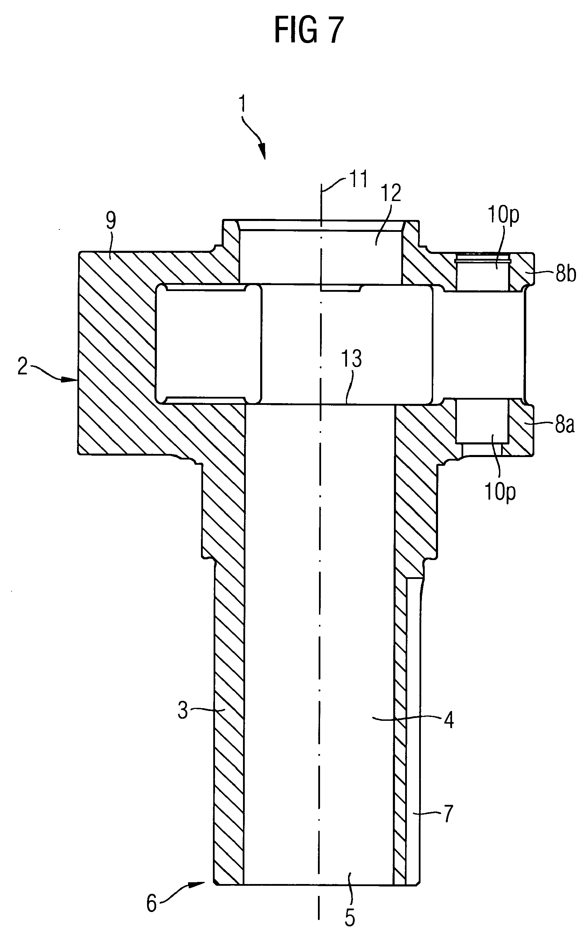

Fig. 7 zeigt einen Schnitt eines Bauteils 1 gemäß einem weiteren Ausführungsbeispiel. Dabei weist die Hohlwelle 3 an ihren beiden axialen Enden jeweils eine Öffnung 5 und 13 auf, durch welche der Hohlraum 4 innerhalb der Hohlwelle 3 zugänglich ist. Der Hohlraum 4 ist somit sowohl durch eine erste kreisförmige Öffnung 5 an einem ersten, von dem Planetenträger 2 abgewandten axialen Ende 6 der Welle 3 als auch durch eine zweite kreisförmige Öffnung 13 an einem zweiten, dem Planetenträger 2 zugewandten axialen Ende der Welle 3 zugänglich. Gegenüber dem in den Fig. 1 bis 3 gezeigten ersten Ausführungsbeispiel fehlt somit bei dem in Fig. 7 dargestellten Ausführungsbeispiel eine Trennwand, welche den Hohlraum 4 an dem dem Planetenträger 2 zugewandten axialen Ende der Hohlwelle 3 abschließt.

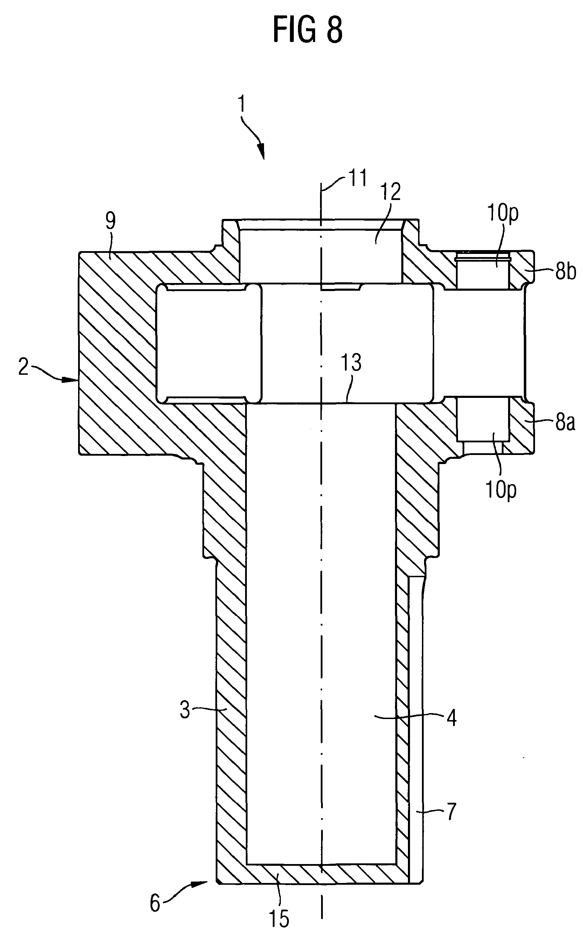

Fig. 8 zeigt einen Schnitt eines Bauteils 1 gemäß einem weiteren Ausführungsbeispiel, welches ähnlich wie das in Fig. 7 gezeigte Ausführungsbeispiel ausgebildet ist, außer dem von dem Planetenträger 2 abgewandten axialen Ende 6 der Welle 3: im Gegensatz zu dem Ausführungsbeispiel von Fig. 7 verschließt bei dem in Fig. 8 dargestellten Ausführungsbeispiel eine Stirnwand 15 das von dem Planetenträger 2 abgewandte axiale Ende 6 der Welle 3.

Somit weist die Hohlwelle 3 an einem ersten, dem Planetenträger 2 zugewandten axialen Ende der Welle 3 eine Öffnung 13 auf, durch welche der Hohlraum 4 innerhalb der Hohlwelle 3 zugänglich ist. Die an einer ersten Wange 8a des Planetenträgers 2 angeformte Welle 3 weist somit einen zum Planetenträger 2 offenen Hohlraum 4 auf. Das dem ersten axialen Wellenende gegenüber liegende zweite axiale Ende 6 der Welle 3 weist demgegenüber die Stirnwand 15 auf, so dass der innerhalb der Hohlwelle 3 liegende Hohlraum 4 an diesem zweiten axialen Ende 6 gegenüber der Umgebung der Welle 3 abgeschlossen ist.

Vorzugsweise ist dabei die Wanddicke der Stirnwand 15 geringer als oder gleich der Wanddicke des sich an die Stirnwand 15 anschließenden Zylindermantels der Hohlwelle 3. In diesem Fall kann beim Gießen des Bauteils 1 eine definierte, gerichtete Erstarrung des flüssigen Metalls beginnend an der Stirnwand 15 mit ihrer relativ geringen Wanddicke über die stetig zunehmende Wanddicke des Zylindermantels in Richtung zu der verhältnismäßig dickwandigen Wange des Planetenträgers 2 erfolgen, von wo das Gussmaterial eintritt.

## Patentansprüche

1. Einstückig gegossenes Bauteil (1) für ein Planetengetriebe, umfassend einen Planetenträger (2) und eine koaxial an dem Planetenträger (2) angeordnete hohl gegossene Hohlwelle (3), deren Hohlraum (4) durch eine Öffnung (5, 13) an mindestens einem axialen Ende (6) der Hohlwelle (3) zugänglich ist, wobei die Hohlwelle (3) an ihrem Außenumfang mindestens ein zur Ausbildung einer Welle-Nabe-Verbindung geeignetes Verbindungselement (7) trägt,
wobei der Planetenträger (2) eine Wange (8a) umfasst, an welcher die Hohlwelle (3) angeordnet ist und
wobei die Gießquerschnitte in der Hohlwelle (3) dünner sind als in der sich anschließenden Wange (8a) des Planetenträgers (2).

2. Bauteil (1) nach Anspruch 1, wobei das zur Ausbildung einer Welle-Nabe-Verbindung geeignete Verbindungselement (7) eine Passfedernut oder eine Verzahnung ist.

3. Bauteil (1) nach Anspruch 1 oder 2, wobei die Hohlwelle (3) hohlzylinderförmig ist oder die Form eines Kegelstumpfes besitzt.

4. Bauteil (1) nach einem der vorhergehenden Ansprüche, wobei die Öffnung (5, 13) kreisförmig ist.

5. Bauteil (1) nach einem der vorhergehenden Ansprüche, wobei der Hohlraum (4) zylinderförmig ist.

6. Bauteil (1) nach einem der vorhergehenden Ansprüche, wobei der Hohlraum (4) über seine axiale Länge einen konstanten oder variierenden Innendurchmesser aufweist.

7. Bauteil (1) nach einem der vorhergehenden Ansprüche, wobei die Wandstärke der Hohlwelle (3) in Richtung zu dem Planetenträger (2) zunimmt.

8. Bauteil (1) nach einem der vorhergehenden Ansprüche, wobei der Außendurchmesser der Hohlwelle (3) in Richtung zu dem Planetenträger (2) zunimmt.

9. Bauteil (1) nach einem der vorhergehenden Ansprüche, wobei der Planetenträger (2) zwei parallele, durch Stege (9) miteinander verbundene Wangen (8a, 8b) umfasst, wobei die Hohlwelle (3) an einer Seite einer der Wangen (8a) angeordnet ist, welche von der anderen Wange (8b) abgewandt ist.

10. Bauteil (1) nach einem der vorhergehenden Ansprüche, wobei der Hohlraum (4) durch eine Öffnung (5) an einem von dem Planetenträger (2) abgewandten axialen Ende (6) der Hohlwelle (3) und/oder durch eine Öffnung (13) an einem dem Planetenträger (2) zugewandten axialen Ende der Hohlwelle (3) zugänglich ist.

11. Planetengetriebe, umfassend ein Bauteil (1) nach einem der vorhergehenden Ansprüche.

12. Planetengetriebe nach Anspruch 11, wobei die Hohlwelle (3) einen Abtriebszapfen des Planetengetriebes bildet.

## Claims

1. Component (1), which is cast as one piece, for a planetary gear train, said component comprising a planetary carrier (2) and a hollow-cast hollow shaft (3) arranged in a coaxial manner on the planetary carrier (2), the chamber (4) of the shaft being accessible through an opening (5, 13) on at least one axial end (6) of the hollow shaft (3), wherein the hollow shaft (3) supports on its outer periphery at least one connecting element (7) suitable for forming a shaft-hub connection,
wherein the planetary carrier (2) comprises a cheek (8a), on which the hollow shaft (3) is arranged and
wherein the cast cross-sections in the hollow shaft (3) are thinner than in the adjoining cheek (8a) of the planetary carrier (2).

2. Component (1) according to claim 1, wherein the connecting element (7) suitable for forming a shaft-hub connection is a keyway or gear teeth.

3. Component (1) according to claim 1 or 2, wherein the hollow shaft (3) is hollow-cylinder-shaped or has the shape of a truncated cone.

4. Component (1) according to one of the preceding claims, wherein the opening (5, 13) is circular.

5. Component (1) according to one of the preceding claims, wherein the chamber (4) is cylindrical.

6. Component (1) according to one of the preceding claims, wherein the chamber (4) has a constant or varying inner diameter over its axial length.

7. Component (1) according to one of the preceding claims, wherein the wall thickness of the hollow shaft (3) increases in the direction of the planetary carrier (2).

8. Component (1) according to one of the preceding claims, wherein the outer diameter of the hollow shaft (3) increases in the direction of the planetary carrier (2).

9. Component (1) according to one of the preceding claims, wherein the planetary carrier (2) comprises two parallel cheeks (8a, 8b) connected to one another by webs (9), wherein the hollow shaft (3) is arranged on a side of one of the cheeks (8a), said side facing away from the other cheek (8b).

10. Component (1) according to one of the preceding claims, wherein the chamber (4) is accessible through an opening (5) on an axial end (6) of the hollow shaft (3), said axial end facing away from the planetary carrier (2), and/or through an opening (13) on an axial end of the hollow shaft (3), said axial end facing toward the planetary carrier (2).

11. Planetary gear train, comprising a component (1) according to any one of the preceding claims.

12. Planetary gear train according to claim 11, wherein the hollow shaft (3) forms an output journal of the planetary gear train.

## Revendications

1. Pièce (1) coulée d'un seul tenant pour un train épicycloïdal, comprenant une cage (2 de transmission et un arbre (3) coulé creux, disposé coaxialement à la cage (2) et dont la cavité (4) est accessible par une ouverture (5, 13) sur au moins un bout (6) axial de l'arbre (3) creux, l'arbre (3) creux portant sur son pourtour extérieur au moins un élément (7) de liaison propre à constituer une liaison arbre-moyeu,
dans laquelle la cage (2) comprend un flasque (8a) sur lequel est monté l'arbre (3) creux et
dans laquelle les sections transversales de coulée sont plus minces dans l'arbre (3) creux que dans le flasque (8a) se raccordant de la cage (2).

2. Pièce (1) suivant la revendication 1, dans laquelle l'élément (7) de liaison propre à constituer une liaison arbre-moyeu est une rainure de clavette ou une denture.

3. Pièce (1) suivant la revendication 1 ou 2, dans laquelle l'arbre (3) creux est en forme de cylindre creux ou a la forme d'un tronc de cône.

4. Pièce (1) suivant l'une des revendications précédentes, dans laquelle l'ouverture (5, 13) est circulaire.

5. Pièce (1) suivant l'une des revendications précédentes, dans laquelle la cavité (4) est de forme cylindrique.

6. Pièce (1) suivant l'une des revendications précédentes, dans laquelle la cavité (4) a, sur sa longueur axiale, un diamètre intérieur constant ou variable.

7. Pièce (1) suivant l'une des revendications précédentes, dans laquelle l'épaisseur de paroi de l'arbre (3) creux augmente dans la direction vers la cage (2).

8. Pièce (1) suivant l'une des revendications précédentes, dans laquelle le diamètre extérieur de l'arbre (3) creux augmente dans la direction vers la cage (2).

9. Pièce (1) suivant l'une des revendications précédentes, dans laquelle la cage (2) comprend deux flasques (8a, 8b) parallèles reliés entre eux par les entretoises (9), l'arbre (3) creux étant disposé sur une face de l'un des flasques (8a) qui est éloignée de l'autre flasque (8b).

10. Pièce (1) suivant l'une des revendications précédentes, dans laquelle la cavité (4) est accessible par une ouverture (5) à un bout (6) axial, éloigné de la cage (2), de l'arbre (3) creux et/ou par une ouverture (13) à un bout axial, tourné vers la cage (2), de l'arbre (3) creux.

11. Train épicycloïdal comprenant une pièce (1) suivant l'une des revendications précédentes.

12. Train épicycloïdal suivant la revendication 11, dans lequel l'arbre (3) creux forme un tourillon de sortie du train épicycloïdal.
